# FASCICULE DE BREVET EUROPEEN

(11) **EP 4 234 326 B1**
(45) Date de publication et mention de la délivrance du brevet: **22.01.2025**
(21) Numéro de dépôt: 23154880.1
(22) Date de dépôt: 03.02.2023
(51) Int. Cl.: B60N 2/68, B60N 2/015, B60N 2/36

(54) **ENSEMBLE DE DOSSIER POUR SIÈGE DE VÉHICULE COMPRENANT UNE ARMATURE TUBULAIRE SOUDÉ À UN GOUSSET**
RÜCKENLEHNENANORDNUNG FÜR EINEN FAHRZEUGSITZ MIT EINEM ROHRRAHMEN MIT EINEM DARAN VERSCHWEISSTEN ECKBLECH
BACKREST ASSEMBLY FOR A VEHICLE SEAT COMPRISING A TUBULAR FRAME WELDED TO A GUSSET

(30) Priorité: 28.02.2022 FR 2201748
(43) Date de publication de la demande: 30.08.2023
(73) Titulaire: FAURECIA Sièges d'Automobile, 92000 Nanterre (FR)
(72) Inventeur: RUELLAND, Michel, 91210 Draveil (FR); CHAUSSEMY, Hervé, 91152 Etampes (FR)
(74) Mandataire: Plasseraud IP

(56) Documents cités:
- DE-A1- 102014 220 242
- FR-A1- 3 013 008
- FR-A1- 3 112 999
- US-B2- 8 678 496

## Description

La présente invention est relative à un ensemble de dossier pour siège de véhicule comprenant une armature de dossier, tubulaire, comprenant un tube, et au moins un support fixe, ladite armature de dossier étant montée articulée en pivot par rapport audit au moins un support fixe par l'intermédiaire d'un gousset soudé au tube et d'un axe articulation articulant ledit support fixe au gousset.

La présente invention concerne encore un siège de véhicule comprenant un tel ensemble de dossier. La présente invention concerne encore un procédé de fabrication d'un ensemble de dossier.

### Domaine technique

La présente invention relève du domaine des ensembles de dossier pour siège de véhicule, et plus particulièrement des ensembles de dossier pour les sièges du deuxième rang de sièges du véhicule, par exemple les sièges arrière du véhicule automobile.

Par siège, on se réfère ci à tout type de siège, à savoir par exemple les sièges individuels, par exemple trois sièges individuels sur le deuxième rang, ou encore un siège banquette, s'étendant sur toute la largeur du deuxième rang configuré pour recevoir trois utilisateurs, ou encore les sièges 1/3-2/3, à savoir que le deuxième rang comprend un siège individuel et un siège double configuré pour recevoir de manière juxtaposée deux utilisateurs.

### Technique antérieure

Les sièges du deuxième rang de véhicule automobile peuvent typiquement comprendre un ou plusieurs ensembles de dossier, un tel ensemble de dossier comprenant une armature de dossier tubulaire, typiquement formée par un cadre tubulaire formé par un tube plié/cintré.

La face frontale du cadre reçoit la garniture du dossier, destinée à recevoir le dos d'un utilisateur, et la face dorsale, reçoit typiquement un panneau d'habillage. Un tel panneau d'habillage forme typiquement une paroi de fond du coffre du véhicule automobile pour un véhicule automobile à deux rangées de siège.

Une telle armature de dossier est articulée à des supports fixes, typiquement solidaires du plancher du véhicule. Cette articulation de l'armature de dossier aux support fixes peut permettre de passer l'armature de dossier, et plus généralement le dossier, d'une configuration d'utilisation, relevée, configurée pour soutenir le dos d'un utilisateur assis sur une assise du siège, jusqu'à une configuration rabattue.

Dans la configuration relevée, le dossier est en position pour recevoir le dos d'un ou plusieurs utilisateurs. Dans la configuration rabattue, le dossier peut être rabattu du côté de l'assise pour augmenter la capacité de chargement du véhicule. La paroi d'habillage, dorsale, peut former alors une surface plane de chargement, typiquement en formant un plancher plat avec le plancher du coffre.

La présente invention s'intéresse plus particulièrement aux moyens utilisés pour articuler l'armature de dossier, tubulaire, aux supports fixes, et qui comprennent d'une part, une tôle conformée, typiquement appelée gousset par l'homme du métier, cette tôle étant soudée au tube de l'armature, ainsi que, d'autre part, un axe d'articulation reliant de manière articulée le gousset au support fixe.

Un premier état de la technique connaît des goussets obtenus par simple technique d'emboutissage d'une tôle, et qui sont soudés au tube par une ligne de soudure continue, ou plusieurs lignes de soudure, discontinues, sur l'un seulement des côtés du tube, typiquement sur la face frontale du tube uniquement.

Le mode de fabrication est peu onéreux, en ce qu'il ne nécessite que deux postes d'emboutissage pour découper et mettre en forme le gousset à partir une tôle plane, à savoir :
- un premier poste de découpe par emboutissage comprenant un premier couple poinçon/matrice, assurant la découpe de la tôle plane, et
- un deuxième poste comprenant un deuxième couple poinçon/matrice, assurant la mise en forme de la feuille découpée par emboutissage.

Ainsi la mise en forme du gousset à partir de la tôle plane découpée ne nécessite qu'un seul coup de presse pour la découpe auquel succède un seul coup de presse pour la mise en forme du gousset.

Selon les constatons des inventeurs, en cas de crash les efforts transitant entre le gousset et le tube, localisés d'un seul côté du tube peuvent endommager le tube, et provoquer des déchirements de la peau du tube le long de la soudure.

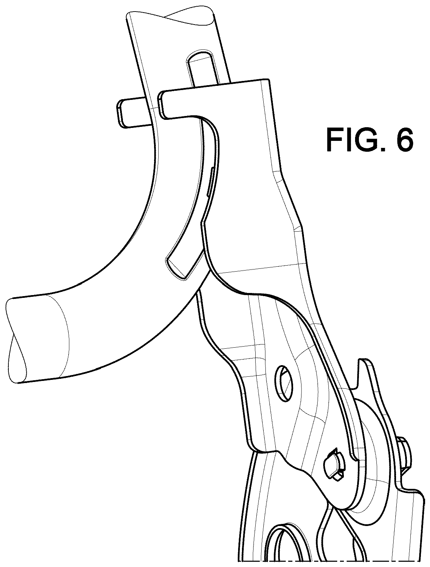

Un deuxième état de la technique connait encore un support formé d'une tôle conformée en U, et illustré à titre indicatif à la figure 6. Lors de la fabrication, le tube de l'armature est inséré entre les deux ailes parallèles du U, en regard l'une de l'autre, ce qui permet de souder le tube au support par deux soudures, des deux côtés du tubes.

Selon les constatations des inventeurs, un tel support offre une meilleure résistance en cas de crash, les efforts transitant entre le gousset et le tube étant répartis des deux côtés du tube. En revanche, le procédé de mise en forme d'un tel support de section en U requiert un outillage spécifique pour plier les deux ailes du U, plus onéreux qu'un simple outillage d'emboutissage nécessaire à l'obtention du premier état de la technique. Les documents US8678496 B2 ou encore US20150258925 A1 décrivent un tel type support formé d'une tôle pliée en U selon cet enseignement, recevant un tube de l'armature du dossier entre les deux ailes du U.

Un équipement spécifique peut comprendre selon la technologie choisie des volets mobiles sur une matrice d'emboutissage. Encore, la découpe et la mise en forme par emboutissage de ce gousset selon ce deuxième état de la technique peut nécessiter à tout le moins trois postes d'emboutissage pour obtenir ce support à partir d'une tôle plane, avec tout d'abord un premier poste de découpe par emboutissage comprenant un premier couple poinçon/matrice, assurant la découpe de la tôle plane, à la découpe souhaitée, mais encore au moins deux postes d'emboutissage distincts, avec un moins un deuxième couple poinçon/matrice et un troisième couple poinçon/matrice pour obtenir la mise en forme du support en U, en plusieurs temps (chaque poste n'assurant qu'une mise en forme partielle du support).

Autrement dit et dans tous les cas, la mise en forme du support selon ce second état de la technique nécessite plusieurs coups de presse, pour mettre en forme le gousset à partir de la tôle découpée (sur le premier poste) afin d'assurer la mise en forme totale du support de section en U.

### Résumé

La présente invention vient améliorer la situation.

Il est proposé un ensemble de dossier pour siège de véhicule comprenant une armature de dossier, tubulaire, comprenant un tube, et au moins un support fixe, ladite armature de dossier étant montée articulée en pivot par rapport audit au moins un support fixe par l'intermédiaire d'un gousset soudé au tube et d'un axe articulation articulant ledit support fixe par rapport au gousset.

Ledit gousset étant une tôle comprenant :
- une première partie en contact avec le tube, fixée au tube, d'un premier côté du tube, par une première soudure,
- une deuxième partie en contact avec le tube et fixée au tube, d'un deuxième côté du tube, par une deuxième soudure,
le tube étant reçu dans un logement du gousset, défini entre la première partie et la deuxième partie, la première partie et la deuxième partie étant décalées l'une par rapport à l'autre, transversalement au tube, suivant une dimension d du logement.

De manière notable encore, la première partie et la deuxième partie sont décalées suivant la longueur du tube, l'une par rapport à l'autre. Un tel décalage de la première partie et de la deuxième partie sur la longueur du tube autorise avantageusement une fabrication pour laquelle la tôle formant le gousset est une tôle découpée et mise en forme par emboutissage de sorte que la première partie et la deuxième partie décalées l'une par rapport à l'autre transversalement au tube, sont obtenues lors de l'emboutissage de la tôle en une seule opération de mise en forme par emboutissage à partir d'une tôle découpée plane.

Lors de cet emboutissage, le décalage transversal est formé entre la première partie et la deuxième partie, par le travail entre un poinçon et une matrice de l'outillage d'emboutissage.

Le mode de fabrication est peu onéreux, en ce qu'il ne nécessite que deux postes d'emboutissage pour découper et mettre en forme le gousset à partir une tôle plane, à savoir :
- un premier poste de découpe par emboutissage comprenant un premier couple poinçon/matrice, assurant la découpe de la tôle plane, et
- un deuxième poste comprenant un deuxième couple poinçon/matrice, assurant la mise en forme de la tôle découpée par emboutissage.

En outre, la matrice est dépourvue de technologie complexe à volets mobiles. Autrement dit, la mise en forme du gousset à partir de de la tôle découpée au premier poste de découpe par emboutissage ne nécessite avantageusement qu'un seul coup de presse pour assurer la mise en forme (totale) du gousset par le travail entre le poinçon et la matrice du deuxième couple.

La présente invention assure avantageusement une résistance accrue de la liaison soudée entre le gousset et le tube en cas de crash par rapport au premier état de la technique dont le gousset est soudé d'un seul côté du tube, tout en permettant une fabrication à moindre cout du gousset, par comparaison au second état de la technique requérant un outillage spécifique ne se limitant pas à un simple emboutissage.

Les caractéristiques exposées dans les paragraphes suivants peuvent, optionnellement, être mises en oeuvre. Elles peuvent être mises en oeuvre indépendamment les unes des autres ou en combinaison les unes avec les autres :

L'armature tubulaire peut former un cadre présentant une face frontale et une face dorsale, et dans lequel la première soudure peut relier le premier côté du tube avec la première partie du gousset sur la face frontale du cadre et la deuxième soudure peut relier le deuxième côté du tube avec la deuxième partie du gousset sur la face dorsale du cadre, ou inversement, à savoir que la première soudure peut relier le premier côté du tube avec la première partie du gousset sur la face dorsale du cadre et la deuxième soudure peut relier le deuxième côté du tube avec la deuxième partie du gousset sur la face frontale du cadre.

Selon un mode de réalisation, le gousset peut être soudé au niveau d'un coude du tube comprenant une première extrémité et une deuxième extrémité, ainsi qu'une portion médiane du coude entre la première extrémité et la deuxième extrémité,
et dans lequel la première partie peut comprendre :
   - une première portion de tôle soudée à la première extrémité du coude par une première ligne de soudure de la première soudure,
   - une deuxième portion de tôle soudée à une deuxième extrémité du coude par une deuxième ligne de soudure de la première soudure,
la première ligne de soudure et la deuxième ligne de soudure étant discontinues suivant la longueur du coude sur le premier côté du tube.
La deuxième partie peut comprendre une troisième portion de tôle qui est soudée au tube par une troisième ligne de soudure reliant la deuxième partie et la portion médiane du coude sur le deuxième côté du tube. La première portion de tôle, la troisième portion de tôle et la deuxième portion de tôle sont alors de préférence réparties, successivement, les unes à la suite des autres suivant la longueur du coude, en alternance entre le premier côté et le deuxième côté.

Selon un mode de réalisation, la première portion de tôle et la deuxième portion de tôles sont discontinues et coplanaires entre elles, et dans lequel la deuxième partie formant la troisième portion de tôle, plane, est parallèle au plan de la première et deuxième portion, la troisième portion de tôle décalée par rapport au plan de la première et deuxième portion, de la dimension d suivant une direction perpendiculaire audit plan.

Selon un mode de réalisation, la première portion de tôle, plane, et la deuxième portion de tôle, plane, viennent en appui plan sur un premier plat du coude du premier côté du tube, et la troisième portion de tôle, plane, formant la deuxième partie vient en appui plan sur une deuxième plat du coude du deuxième côté du tube.

Selon un mode de réalisation, la tôle formant gousset comprend un siège pour l'axe d'articulation comprenant une première nervure et une deuxième nervure parallèles entre elles, obtenue par emboutissage du gousset, la première nervure et la deuxième nervure en contact avec deux génératrices d'une portion cylindrique de l'axe d'articulation, l'axe d'articulation soudé au gousset par une troisième soudure joignant la première nervure à la portion cylindrique et une quatrième soudure joignant la deuxième nervure à la portion cylindrique.

Selon un mode de réalisation, la première partie de tôle peut être réalisée sur une partie principale de la tôle, alors que la deuxième partie notamment formée par une languette s'étend en saillie de la partie principale, ladite deuxième partie étant de plus petites dimensions par rapport à la partie principale. Eventuellement, une portion de liaison de la tôle relie la deuxième partie à la partie principale, en formant un siège sur lequel une portion convexe du coude vient en appui, la portion de liaison épousant de préférence la trajectoire du coude

Selon un mode de réalisation, la partie principale peut comprendre un bord de renfort, en périphérie extérieure de partie principale, obtenu lors de l'emboutissage, s'étendant en saillie de la partie principale de la tôle, suivant un sens de saillie qui peut être opposé au sens de saillie de la deuxième partie par rapport à la partie principale de la tôle.

Selon un mode de réalisation le bord périphérique comprend une ouverture, traversée par l'axe d'articulation, soudé à la partie principale de la tôle.

Selon un mode de réalisation, ledit au moins un support comprend un premier support et un deuxième support, répartis de part et d'autre de l'armature de dossier, et dans lequel :
- un premier gousset relie un premier coude de l'armature au premier support, le premier gousset soudé au premier coude, par une première soudure joignant un premier côté du tube et la première partie du premier gousset et par une deuxième soudure joignant un deuxième côté du tube et la deuxième partie du premier gousset,
- un deuxième gousset relie un deuxième coude de l'armature au deuxième support, le deuxième gousset soudé au deuxième coude, par une première soudure joignant un premier coté du tube et la première partie du deuxième gousset et par une deuxième soudure joignant un deuxième côté du tube et la deuxième partie du deuxième gousset.

La présente invention concerne encore un procédé de fabrication d'un ensemble de dossier pour siège de véhicule comprenant :
- /A/ obtention d'un gousset par découpe par emboutissage et emboutissage d'une tôle, formant un logement défini entre une première partie et une deuxième partie, la première partie et la deuxième partie décalées l'une par rapport à l'autre suivant une dimension d de largeur du logement, la première partie et la deuxième partie décalées l'une par rapport à l'autre suivant une longueur du logement,
- /B/ assemblage d'une armature de dossier, tubulaire comprenant un tube, par insertion d'un coude de l'armature tubulaire dans le logement du gousset, la première partie en contact d'un premier côté du tube, et la deuxième partie en contact d'une deuxième côté du tube suivant des positions décalées suivant la longueur du tube,
- ICI soudage du gousset à l'armature de dossier par une première soudure entre la première partie et le premier côté du tube et une deuxième soudure entre la deuxième partie et le deuxième côté du tube, la première soudure et la deuxième soudure décalées suivant la longueur du tube.

L'obtention du gousset en /A/ peut ne nécessiter que deux postes d'emboutissage pour découper et mettre en forme le gousset à partir une tôle plane, à savoir :
- un premier poste de découpe par emboutissage comprenant un premier couple poinçon/matrice, assurant la découpe de la tôle plane, et
- un deuxième poste comprenant un deuxième couple poinçon/matrice, assurant la mise en forme de la tôle découpée par emboutissage.

La mise en forme de la première partie et la deuxième partie décalées l'une par rapport à l'autre, d'une part, transversalement au tube, et d'autre part, longitudinalement au tube, et plus généralement la mise en forme du gousset, peuvent être obtenues lors de l'emboutissage de la tôle en une seule opération de mise en forme par emboutissage, à savoir un seul coup de presse au deuxième poste.

Ainsi et selon un mode de réalisation avantageux du procédé, en /A/ on obtient la découpe et la mise en forme du gousset à partir d'une tôle plane en une seule opération de découpe par emboutissage, à laquelle succède une seule opération de mise en forme par emboutissage

### Brève description des dessins

D'autres caractéristiques, détails et avantages apparaîtront à la lecture de la description détaillée ci-après, et à l'analyse des dessins annexés, parmi lesquels :
**Fig. 1**

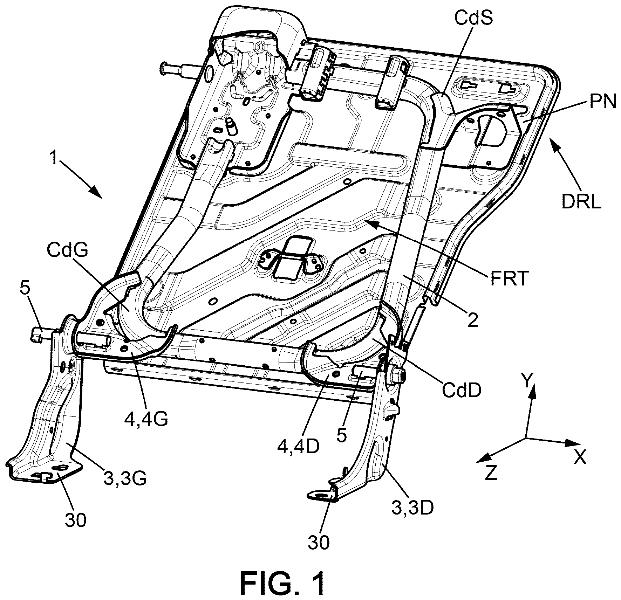

   [Fig. 1] montre un ensemble de dossier selon la présente invention, comprenant une armature de dossier, tubulaire et deux supports fixes, ladite armature étant formée d'un cadre obtenu par pliage d'un tube, le cadre tubulaire, formant une traverse, inférieure, une traverse supérieure, et deux montants, droite et gauche, la traverse inférieure reliée au montant gauche par un premier coude du tube, gauche, d'une part, et reliée au montant droite par un deuxième coude du tube, droite, l'armature de dossier liée en pivot suivant un axe d'articulation audits support fixé, d'une part, par un premier gousset, gauche, soudé au premier coude et articulé au support fixe, gauche, par un premier axe d'articulation, et d'autre part, par un deuxième gousset, droite soudé au deuxième coude et articulé au support fixe, droite, par un deuxième axe d'articulation, coaxial au premier axe d'articulation, un panneau d'habillage étant solidarisé au cadre de l'armature de dossier sur la face dorsale de l'armature.
**Fig. 2**

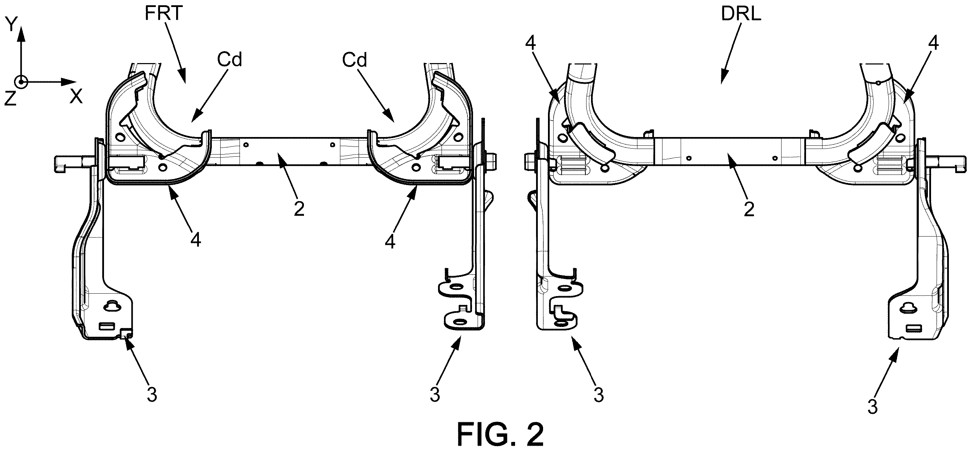

   [Fig. 2] montre, d'une part, à gauche une illustration de détail de l'articulation de l'ensemble selon la figure 1 (panneau d'habillage non illustré) vue de la face frontale de l'armature, et, d'autre part, à droite, une telle illustration vue de la face dorsale.
**Fig. 3**

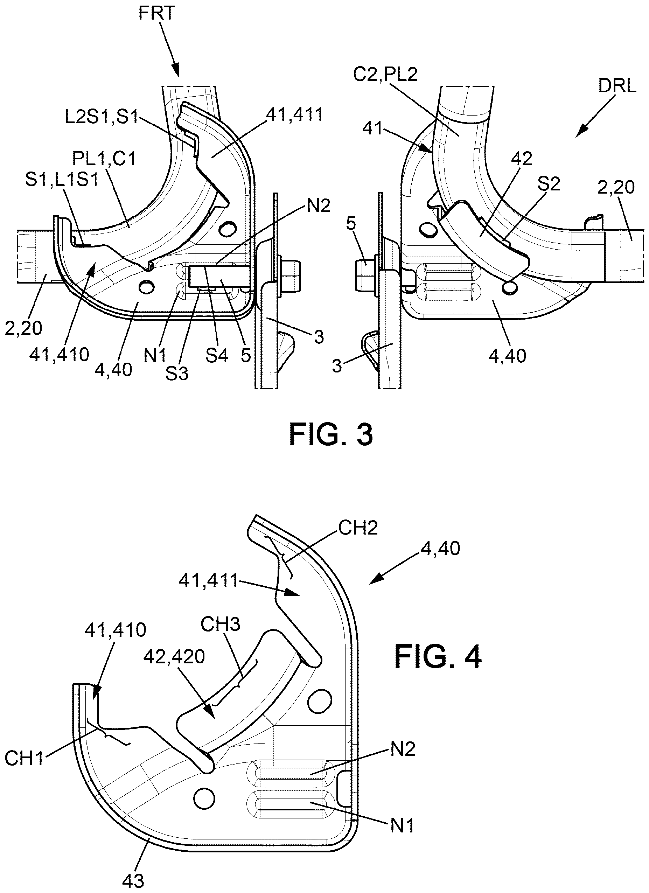

   [Fig. 3] est, d'une part, à gauche, une vue de détail de l'ensemble selon la figure 1, centrée sur le deuxième gousset, droite, vue de la face frontale, illustrant la première ligne et la deuxième ligne de soudure de la première soudure du premier côté du tube, et d'autre part, à gauche, une telle illustration vue de la face dorsale illustrant une troisième ligne de soudure de la deuxième soudure, du deuxième côté du tube.
**Fig. 4**
   [Fig. 4] montre une vue de détail du gousset, droite, vue de la face frontale
**Fig. 5**

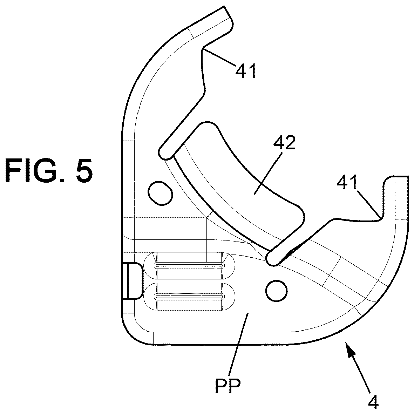

   [Fig. 5] montre une vue détail selon la figure 3, vue de la face dorsale.
**Fig. 6**
   [Fig. 6] montre un assemblage selon un état de la technique connu.
**Fig. 7**

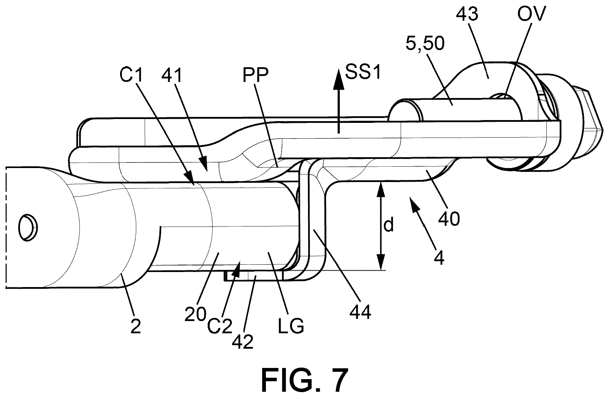

   [Fig. 7] montre l'assemblage entre le tube et le gousset, le tube reçu dans un logement du gousset, s'étendant transversalement au tube suivant une dimension d séparant la première partie en appui et soudé par une première soudure d'un premier côté du tube et la deuxième partie en appui et soudé par une deuxième soudure du deuxième côté du tube.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Aussi la présente invention est relative à un ensemble de dossier 1 pour

siège de véhicule comprenant une armature de dossier 2, tubulaire, comprenant un tube 20, et au moins un support fixe 3. L'armature de dossier est montée articulée en pivot par rapport audit au moins un support fixe 3 par l'intermédiaire d'un gousset 4 soudé au tube et d'un axe articulation 5 articulant ledit support fixe 3 par au gousset. L'axe d'articulation 5 peut être soudé au gousset 4, articulé en pivot audit au moins un support fixe 3.

De manière notable le gousset 4 est une tôle 40 qui comprend :
- une première partie 41 en contact avec le tube 20, fixée au tube, d'un premier côté C1 du tube, par une première soudure S1,
- une deuxième partie 42 en contact avec le tube 20 et fixée au tube, d'un deuxième côté C2 du tube, par une deuxième soudure S2.

Le tube 20 est reçu dans un logement LG du gousset, défini entre la première partie 41 et la deuxième partie 4.

En particulier, et comme visible à la figure 7, la première partie 41 et la deuxième partie 42 sont décalées l'une par rapport à l'autre, transversalement au tube, suivant une dimension d du logement. La dimension d est déterminée pour assurer l'emboîtement du tube dans le logement.

Le gousset 4 est soudé au tube, des deux côtés opposés du tube 20 respectivement par la première soudure S1 et la deuxième soudure S2, offrant notamment une résistance accrue par rapport à l'état de la technique des goussets soudés d'un seul côté du tube 20. La première soudure S1 est typiquement réalisée entre le premier côté C1 du tube 20 et un chant ou plusieurs chants de la première partie 41.

La deuxième soudure S2 est typiquement réalisée entre le deuxième côté C2 du tube 20 et un chant (ou plusieurs chants) de la deuxième partie 42. Les soudures, première et deuxième S1, S2 peuvent être typiquement des soudures par apport de métal, tel que par exemple une soudure MAG.

Selon une autre caractéristique avantageuse, la première partie 41 et la deuxième partie 42 sont décalées suivant la longueur du tube. Décaler la première partie 41 et la deuxième partie 42 l'une par rapport à l'autre sur la longueur du tube autorise que la tôle 40 formant le gousset soit une tôle découpée et configurée pour être mise en forme par emboutissage, avantageusement en une seule opération de mise en forme par emboutissage (à partir d'une tôle découpée plane). Autrement dit la première partie 41 et la deuxième partie 42 décalées l'une par rapport à l'autre transversalement au tube, sont obtenues par l'emboutissage de la tôle, par le travail entre un couple poinçon et matrice d'un outillage d'emboutissage, en un seul coup de presse.

La tôle 4 formant gousset 40, y compris la première partie 41 et la seconde partie 41, décalées l'une par rapport à l'autre, d'un part, suivant la longueur du tube 20, et d'autre part, transversalement au tube selon la dimension d, est avantageusement obtenue par les techniques d'emboutissage, et possiblement seulement deux postes d'emboutissage.

Le mode de fabrication est peu onéreux, en ce qu'il ne nécessite que deux postes d'emboutissage pour découper et mettre en forme le gousset à partir une tôle plane, à savoir :
- un premier poste de découpe par emboutissage comprenant un premier couple poinçon/matrice, assurant la découpe de la tôle plane, et
- un deuxième poste comprenant un deuxième couple poinçon/matrice, assurant la mise en forme de la tôle découpée par emboutissage.

En particulier, le travail entre le poinçon et la matrice du deuxième couple assure une mise en forme (totale) du gousset en un seul coup de presse

Une telle fabrication est peu onéreuse, et contrairement à l'état de la technique illustré à la figure 6 qui requiert un outillage plus couteux, comprenant typiquement des volets mobiles assurant des étapes de pliage, ou à tout le moins au moins trois postes d'emboutissage, avec un premier poste de découpe par emboutissage pour assurer une découpe à partir d'une tôle plane, et plusieurs postes d'emboutissage, chacun ne permettant qu'une mise en forme partielle du support, à chaque coup de presse.

A la figure 1, et de manière générale, l'armature de dossier 2 comprend le tube 20, qui est plié et/cintré pour former un cadre. Le cadre s'étend typiquement sensiblement suivant un plan du dossier.

Le tube 20 est conformé en longueur pour former le cadre qui comporte, une traverse inférieure, une traverse supérieure et deux montants, droite gauche. Les montants (droite et gauche) et les traverses (supérieure et inférieure) sont formés par des sections des tubes, typiquement rectilignes. L'extrémité inférieure du montant gauche et l'extrémité gauche de la traverse inférieure se prolongent et sont reliés par un premier coude CdG, gauche, obtenu par cintrage/pliage du tube. L'extrémité inférieure du montant droite, et l'extrémité droite de la traverse inférieure se prolonge par un deuxième coude CdD, obtenu par cintrage/pliage du tube.

L'extrémité supérieure du montant droite est reliée à l'extrémité droite de la traverse par un coude supérieur, CdS, à droite. Le cadre tubulaire peut être non fermé, à savoir que sur la figure 1 par exemple, l'extrémité gauche de la traverse supérieure n'est pas reliée à l'extrémité gauche de la traverse par un section du tube.

Ledit au moins un support 3 peut comprendre un premier support 3G, gauche et un deuxième support 3D, droite, répartis de part et d'autre de l'armature de dossier 3 suivant l'axe d'articulation de l'armature du dossier.

Selon un mode de réalisation, typiquement, l'armature comprend deux dit goussets, à savoir :
- un premier gousset 4G reliant un premier coude CdG, notamment gauche, de l'armature au premier support 3G, le premier gousset soudé au premier support 3, par une première soudure S1 joignant un premier coté C1 du tube et la première partie 41 du premier gousset 4G, et par une deuxième soudure S2 joignant un deuxième côté C2 du tube et la deuxième partie 42 du premier gousset,
- un deuxième gousset 4D reliant un deuxième coude CdD, notamment gauche, de l'armature au deuxième support 3D, le deuxième gousset soudé au deuxième support 3D, par une première soudure S1 joignant un premier coté C1 du tube et la première partie 41 du deuxième gousset 4D et par une deuxième soudure S2 joignant un deuxième côté C2 du tube et la deuxième partie 42 du deuxième gousset 4D.

De manière similaire, un premier gousset 4G est articulé au premier support 3G, par un (premier) axe d'articulation 5, et le deuxième gousset est articulé au deuxième support 3D par un (deuxième) axe d'articulation 5. Le premier et le deuxième axe d'articulations sont coaxiaux.

Le premier support 3G et le deuxième support 3D peuvent être constituées par des tôles, conformées. Une base du support (3G ou 3D) peut être configurée pour venir en appui sur la plancher du véhicule, et assurer son ancrage par rapport au plancher. L'axe d'articulation 5 (premier ou deuxième) est typiquement soudé au gousset (premier 4 G ou deuxième 4 D) et monté pivotant au travers d'un palier monté sur le support (premier 3G ou deuxième 3D).

Selon un mode de réalisation, la première soudure S1 relie le premier côté C1 du tube 20 avec la première partie 41 du gousset 4 sur la face frontale FRT du cadre et la deuxième soudure S2 relie le deuxième côté C du tube avec la deuxième partie 42 du gousset 4 sur la face dorsale DRL du cadre.

Un panneau d'habillage PN peut être solidarisé à la face dorsale DRL du cadre. Une garniture de dossier formant une matelassure est typiquement solidarisée sur la face frontale FRT du cadre.

De préférence, le gousset 4 est soudé au niveau d'un coude Cd du tube, et par exemple au premier coude CdG pour le premier gousset 4G et au deuxième coude CdD pour le deuxième gousset 4G.

Le coude Cd, notamment premier coude CdG ou deuxième coude CdD, comprend une première extrémité et une deuxième extrémité, ainsi qu'une portion médiane du coude entre la première extrémité et la deuxième extrémité.

Selon un mode de réalisation, la première partie 41 comprend :
- une première portion de tôle 410 soudée à la première extrémité du coude par une première ligne de soudure L1S1 de la première soudure S1,
- une deuxième portion de tôle4 11 soudée à une deuxième extrémité du coude par une deuxième ligne de soudure L2S1 de la première soudure S1.

Comme visible à la figure 3 à gauche, la première ligne de soudure L1S1 et la deuxième ligne de soudure L2S1 sont discontinues suivant la longueur du coude sur le premier côté C1 du tube 20. La première ligne de soudure L1S1 peut être réalisée entre un premier chant CH1 de la première partie 41, non rectiligne, de profil concave, par exemple à la figure 3. La deuxième ligne de soudure L2S1 peut être réalisée entre deuxième un chant CH2 de la première partie 41, non rectiligne, de profil concave, 3 et la deuxième ligne de soudure.

La deuxième partie 42 comprend une troisième portion de tôle 420 qui est soudée au tube par une troisième ligne de soudure L3S2 reliant la deuxième partie 42 et la portion médiane du coude 20 sur le deuxième côté C2 du tube. La troisième ligne de soudure L3S2 est réalisé entre un troisième chant CH3 de la tôle appartenant à la deuxième partie 42.

La première portion de tôle 401 portant le premier chant CH1, la troisième portion de tôle 420 portant le troisième chant CH3, et la deuxième portion de tôle 411 portant le deuxième chant CH2 sont réparties successivement, les unes à la suite des autres, suivant la longueur du coude Cd, en alternance entre le premier côté C1 et le deuxième côté C2.

Selon un mode de réalisation, la première portion 410 de tôle et la deuxième portion 411 de tôle sont discontinues et coplanaires. La deuxième partie 4 formant la troisième portion 420 de tôle, plane, est parallèle au plan de la première et deuxième portion 410, 411. La troisième portion de tôle est décalée par rapport au plan de la première et deuxième portion 410, 411, de la dimension d suivant une direction perpendiculaire audit plan.

De préférence, la première portion 410 de tôle, plane, et la deuxième portion 411 de tôle, plane, viennent en appui plan sur un premier plat PL1 du coude du premier côté C1 du tube. La troisième portion de tôle, plane, formant la deuxième partie 42 vient en appui plan sur une deuxième plat PL2 du coude du deuxième côté C2 du tube 20.

Selon un mode de réalisation, la première partie 41 de tôle est réalisée sur une partie principale PP de la tôle 40, alors que la deuxième partie 42 notamment formée par une languette s'étend en saillie de la partie principale, ladite deuxième partie 42 étant de plus petites dimensions par rapport à la partie principale PP.

Une portion de liaison tôle 44 de la tôle relie la troisième portion plane 420 à la partie principale PP, cette portion de liaison 44 forme un siège sur lequel la portion convexe du coude Cd vient en appui, en épousant de préférence la trajectoire du coude

La partie principale de la tôle peut comprendre un bord de renfort 43, en périphérie extérieure de partie principale PP, obtenu lors de l'emboutissage, s'étendant en saillie de la partie principale de la tôle 40 suivant un sens de saillie SS1 qui opposé au sens de saillie de la deuxième partie 42 par rapport à la partie principale PP de la tôle. Ce bord de renfort 43 a pour fonction de rigidifier la tôle formant gousset, en s'étendant, partiellement sur la périphérie de la partie principale Ce bord de renfort 43 est obtenu lors de l'emboutissage, par le travail du (second) couple poinçon et matrice de l'outillage permettant simultanément l'obtention de la première partie 41 et de la deuxième partie 42, décalée l'une par rapport à l'autre de la dimension d.

Le bord périphérique 43 peut comprendre une ouverture OV, traversée par l'axe d'articulation 5, soudé à la partie principale de la tôle.

La tôle formant gousset peut comprendre un siège pour l'axe d'articulation 5. Le siège peut comprend une première nervure N1 et une deuxième nervure N2 parallèles entre elles, obtenue par emboutissage du gousset 4.

La première nervure N1 et la deuxième nervure N2 sont en contact avec deux génératrices d'une portion cylindrique 50 de l'axe d'articulation 5, l'axe d'articulation soudé au gousset par une troisième soudure S3 joignant la première nervure N1 à la portion cylindrique 50 et une quatrième soudure S4 joignant la deuxième nervure N1 à la portion cylindrique 50.

La présente invention est encore relative à un siège de véhicule comprenant un tel ensemble de dossier, dont ledit au moins support fixe 3 est solidaire d'un plancher du véhicule, ainsi que d'une assise.

Un tel ensemble trouve une application particulière pour la deuxième rangée de siège(s) du véhicule. Le deuxième rang de siège peut comporter des sièges individuels, par exemple trois sièges individuels sur le deuxième rang, ou encore un siège banquette, s'étendant sur toute la largeur du deuxième rang configuré pour recevoir trois utilisateurs, ou encore des sièges 1/3-2/3, à savoir que le deuxième rang comprend un siège individuel et un siège double configuré pour recevoir de manière juxtaposée deux utilisateurs.

L'armature de dossier peut être configurée pour passer d'une position d'utilisation, relevée, configurée pour recevoir un utilisateur jusqu'à une position rabattue dans laquelle l'armature de dossier, tubulaire est rabattue en direction du côté de l'assise par pivotement de l'armature de dossier 2 par rapport audit au moins un support fixe, autour de l'axe de l'articulation. Préalablement, l'assise peut éventuellement être déplacée, voire basculée vers l'avant, par exemple de manière indépendante par rapport au plancher, de sorte que l'assise n'entrave pas le rabattement du dossier.

La présente invention concerne encore un procédé de fabrication d'un ensemble de dossier, en particulier un ensemble tel que précédemment décrit, le procédé comprenant :
- /A/ obtention d'un gousset 4 par découpe par emboutissage et emboutissage d'une tôle 40, formant un logement LG défini entre une première partie 41 et une deuxième partie 42, la première partie 41 et la deuxième partie 42 décalées l'une par rapport à l'autre suivant une dimension d de largeur du logement, la première partie 41 et la deuxième partie 42 décalées l'une par rapport à l'autre suivant une longueur du logement,
- /B/ assemblage d'une armature de dossier 2 tubulaire comprenant un tube 20, par insertion d'un coude Cd de l'armature tubulaire dans le logement du gousset 4, la première partie 41 en contact d'un premier côté C1 du tube 20, et la deuxième partie 42 en contact d'une deuxième côté du tube 20 suivant des positions décalées suivant la longueur du tube 2,
- ICI soudage du gousset 4 à l'armature de dossier 2 par une première soudure S1 entre la première partie 41 et le premier côté C1 du tube 20 et une deuxième soudure S2 entre la deuxième partie 42 et le deuxième côté C2 du tube 20, la première soudure S1 et la deuxième soudure S2 décalées suivant la longueur du tube 2.

L'outillage d'emboutissage assurant la découpe et le mise en forme du gousset selon /A/ est avantageusement simple et peu onéreux, requérant uniquement deux postes d'emboutissage par comparaison à celui nécessaire pour obtenir le support de l'état de la technique représenté à la figure 6, qui requiert des volets mobiles, avec actionneurs spécifiques, pour plier les ailes en U ou à tout le moins trois postes d'emboutissage.

L'obtention du gousset en /A/ ne nécessite que deux postes d'emboutissage pour découper et mettre en forme le gousset à partir une tôle plane, à savoir :
- un premier poste de découpe par emboutissage comprenant un premier couple poinçon/matrice, assurant la découpe de la tôle plane, et
- un deuxième poste comprenant un deuxième couple poinçon/matrice, assurant la mise en forme de la tôle découpée par emboutissage.

La mise en forme de la première partie et la deuxième partie décalées l'une par rapport à l'autre transversalement au tube, et plus généralement la mise en forme du gousset, peuvent être obtenues lors de l'emboutissage de la tôle en une seule opération de mise en forme par emboutissage, à savoir un seul coup de presse au deuxième poste.

Ainsi et selon un mode de réalisation avantageux du procédé, en /A/ on obtient la découpe et la mise en forme du gousset à partir d'une tôle plane en de préférence une seule opération de découpe par emboutissage, à laquelle succède de préférence une seule opération de mise en forme par emboutissage.

### Liste des signes de référence

1. Ensemble de dossier,
2. Armature de dossier,
20. Tube
3. Support fixe,
3G, 3D. Premier et deuxième support fixe
30. Base support,
4. Gousset,
4G, 4D. Premier et deuxième gousset,
40. Tôle,
41. Première partie,
410. Première portion de tôle
411. Deuxième portion de tôle,
42. Deuxième partie,
43. Bord de renfort,
44. Portion de liaison (formant un siège pour une portion convexe du coude)
5. Axe d'articulation,
50. Portion cylindrique (Axe d'articulation 5),
Cd. Coude (tube)
CdG, CdD. Premier coude et deuxième coude,
C1. Premier côté,
C2. Deuxième côté,
FRT. Face frontale,
DRL. Face dorsale
N1, N2. Première nervure et deuxième nervure (formant un siège pour l'axe d'articulation)
S1. Première soudure (entre la première partie de la tôle et le tube),
L1S1, L2S1. Première et deuxième ligne de soudure (première soudure S1),
L3S2. Troisième ligne de soudure (deuxième soudure S2),
S2. Deuxième soudure (entre la deuxième partie de la tôle et le tube),
S3. S4. Troisième et quatrième soudure (entre l'axe d'articulation et la troisième et quatrième nervure),
PP. Partie principale,
SS1. Sens de saillie opposé par rapport au sens de saillie de la deuxième partie de tôle par rapport à la partie principale de la tôle.

## Revendications

1. Ensemble de dossier (1) pour siège de véhicule comprenant une armature de dossier (2), tubulaire, comprenant un tube (20), et au moins un support fixe (3), ladite armature de dossier étant montée articulée en pivot par rapport audit au moins un support fixe (3) par l'intermédiaire d'un gousset (4) soudé au tube et d'un axe articulation (5) articulant ledit support fixe (3) par rapport au gousset (4) le gousset (4) étant une tôle (40) comprenant :
- une première partie (41) en contact avec le tube (20), fixée au tube, d'un premier côté (C1) du tube, par une première soudure (S1),
- une deuxième partie (42) en contact avec le tube (20) et fixée au tube, d'un deuxième côté (C2) du tube, par une deuxième soudure (S2),
le tube (20) étant reçu dans un logement (LG) du gousset, défini entre la première partie (41) et la deuxième partie (42), la première partie (41) et la deuxième partie étant (42) décalées l'une par rapport à l'autre, transversalement au tube, suivant une dimension d du logement,
**caractérisé en ce que** la première partie (41) et la deuxième partie (42) sont décalées l'une par rapport à l'autre suivant la longueur du tube.

2. Ensemble selon la revendication 1 dans lequel la tôle (40) formant le gousset est une tôle découpée et mise en forme par emboutissage de sorte que la première partie (41) et la deuxième partie (42) décalées l'une par rapport à l'autre transversalement au tube, sont obtenues lors de l'emboutissage de la tôle en une seule opération de mise en forme par emboutissage.

3. Ensemble selon l'une des revendications 1 à 2 dans lequel l'armature tubulaire (2) forme un cadre présentant une face frontale (FRT) et une face dorsale (DRL), et dans lequel la première soudure (S1) relie le premier côté (C1) du tube avec la première partie (41) du gousset (4) sur la face frontale (FRT) du cadre et la deuxième soudure (S2) relie le deuxième côté (C2) du tube avec la deuxième partie (42) du gousset (4) sur la face dorsale (DRL) du cadre, ou inversement.

4. Ensemble selon l'une des revendications 1 à 3 dans lequel le gousset est soudé au niveau d'un coude (Cd) du tube comprenant une première extrémité et une deuxième extrémité, ainsi qu'une portion médiane du coude entre la première extrémité et la deuxième extrémité,
et dans lequel la première partie (41) comprend :
- une première portion de tôle (410) soudée à la première extrémité du coude par une première ligne de soudure (L1S1) de la première soudure (S1) ,
- une deuxième portion de tôle (411) soudée à une deuxième extrémité du coude par une deuxième ligne de soudure (L2S1) de la première soudure (S1),
la première ligne de soudure (L1S1) et la deuxième ligne de soudure (L2S1) étant discontinues suivant la longueur du coude sur le premier côté (C1) du tube (20),
et dans lequel la deuxième partie (42) comprend une troisième portion de tôle (420) qui est soudée au tube par une troisième ligne de soudure (L3S1) reliant la deuxième partie (42) et la portion médiane du coude (20) sur le deuxième côté (C2) du tube,
et dans lequel la première portion de tôle (401), la troisième portion de tôle (420) et la deuxième portion de tôle (411) sont réparties successivement les unes à la suite des autres suivant la longueur du coude (Cd), en alternance entre le premier côté (C1) et le deuxième côté (C2).

5. Ensemble selon la revendication 4, dans lequel la première portion (410) de tôle et la deuxième portion (411) de tôles sont discontinues et coplanaires entre elles, et dans lequel la deuxième partie (42) formant la troisième portion (420) de tôle, plane, est parallèle au plan de la première et deuxième portion (410, 411), la troisième portion de tôle décalée par rapport au plan de la première et deuxième portion (410, 411), de la dimension d suivant une direction perpendiculaire audit plan.

6. Ensemble selon la revendication 5, dans lequel la première portion (410) de tôle, plane, et la deuxième portion (411) de tôle, plane, viennent en appui plan sur un premier plat (PL1) du coude du premier côté (C1) du tube et la troisième portion de tôle, plane, formant la deuxième partie (42) vient en appui plan sur une deuxième plat (PL2) du coude du deuxième côté (C2) du tube (20).

7. Ensemble selon l'une des revendications 1 à 6, dans lequel la tôle formant gousset comprend un siège pour l'axe d'articulation (5) comprenant une première nervure (N1) et une deuxième nervure (N2) parallèles entre elles, obtenue par emboutissage du gousset (4), la première nervure (N1) et la deuxième nervure (N2) en contact avec deux génératrices d'une portion cylindrique (5) de l'axe d'articulation (5), l'axe d'articulation soudé au gousset par une troisième soudure (S3) joignant la première nervure (N1) à la portion cylindrique (50) et une quatrième soudure (S4) joignant la deuxième nervure (N1) à la portion cylindrique (50).

8. Ensemble selon l'une des revendications 1 à 7, dans lequel la première partie (41) de tôle est réalisée sur une partie principale (PP) de la tôle (40), alors que la deuxième partie (42) notamment formée par une languette s'étend en saillie de la partie principale, ladite deuxième partie (42) étant de plus petites dimensions par rapport à la partie principale (PP).

9. Ensemble selon la revendication 8, dans lequel une portion de liaison (44) de la tôle relie la deuxième partie (42) à la partie principale (PP), en formant un siège sur lequel la portion convexe du coude (Cd) vient en appui, la portion de liaison épousant de préférence la trajectoire du coude

10. Ensemble selon la revendication 8 ou 9, dans lequel la partie principale comprend un bord de renfort (43), en périphérie extérieure de partie principale (PP), s'étendant en saillie de la partie principale de la tôle (40), suivant un sens de saillie (SS1) qui est opposé au sens de saillie de la deuxième partie (42) par rapport à la partie principale (PP) de la tôle.

11. Ensemble selon la revendication 10, dans lequel le bord périphérique (43) comprend une ouverture (OV), traversée par l'axe d'articulation (5), soudé à la partie principale de la tôle.

12. Ensemble selon l'une des revendication 1 à 11, dans lequel ledit au moins un support (3) comprend un premier support (3G) et un deuxième support (3D), répartis de part et d'autre de l'armature de dossier (3), et dans lequel :
- un premier gousset (4G) relie un premier coude (CdG) de l'armature au premier support (3G), ledit premier gousset soudé au premier coude (CdG), par une première soudure (S1) joignant un premier coté (C1) du tube et la première partie (41) du premier gousset (4G) et par une deuxième soudure (S2) joignant un deuxième côté (C2) du tube et la deuxième partie (42) du premier gousset,
- un deuxième gousset (4D) relie un deuxième coude (CdD) de l'armature au deuxième support (3D), ledit deuxième gousset soudé au deuxième coude (CdD), par une première soudure (S1) joignant un premier coté (C1) du tube et la première partie (41) du deuxième gousset (4D) et par une deuxième soudure (S2) joignant un deuxième côté (C2) du tube et la deuxième partie (42) du deuxième gousset (4D).

13. Siège de véhicule comprenant un ensemble de dossier selon l'une des revendication 1 à 12, dont ledit au moins support fixe (3) est solidaire d'un plancher du véhicule, ainsi que d'une assise et dans lequel l'armature de dossier est configuré pour passer d'une position d'utilisation, relevée, configurée pour recevoir un utilisateur jusqu'à une position rabattue dans laquelle l'armature de dossier, tubulaire est rabattue en direction du côté de l'assise par pivotement de l'armature de dossier (2) par rapport audit au moins un support fixe, autour de l'axe de l'articulation (5).

14. Procédé de fabrication d'un ensemble de dossier (1) pour siège de véhicule comprenant :
- /A/ obtention d'un gousset (4) par découpe par emboutissage et emboutissage d'une tôle (40), formant un logement (LG) défini entre une première partie (41) et une deuxième partie (42), la première partie (41) et la deuxième partie (42) décalées l'une par rapport à l'autre suivant une dimension d de largeur du logement, la première partie (41) et la deuxième partie (42) décalées l'une par rapport à l'autre suivant une longueur du logement,
- /B/ assemblage d'une armature de dossier (2) tubulaire comprenant un tube (20), par insertion d'un coude (Cd) de l'armature tubulaire dans le logement du gousset (4), la première partie (41) en contact d'un premier côté (C1) du tube (20), et la deuxième partie (42) en contact d'une deuxième côté du tube (20) suivant des positions décalées suivant la longueur du tube (2),
- /C/ soudage du gousset (4) à l'armature de dossier (2) par une première soudure (S1) entre la première partie (41) et le premier côté (C1) du tube (20) et une deuxième soudure (S2) entre la deuxième partie (42) et le deuxième côté (C2) du tube (20), la première soudure (S1) et la deuxième soudure (S2) décalées suivant la longueur du tube (2).

15. Procédé selon la revendication 14, dans lequel en /A/ on obtient la découpe et la mise en forme du gousset à partir d'une tôle plane en une seule opération de découpe par emboutissage, à laquelle succède une seule opération de mise en forme par emboutissage.

## Patentansprüche

1. Rückenlehnen-Anordnung (1) für einen Fahrzeugsitz, umfassend ein rohrförmiges Rückenlehnen-Gestell (2), welches ein Rohr (20) umfasst, und wenigstens einen festen Träger (3), wobei das Rückenlehnen-Gestell schwenkbar gelenkig gegenüber dem wenigstens einen festen Träger (3) mittels eines Eckelements (4), welches an das Rohr geschweißt ist, und einer Gelenkachse (5) montiert ist, welche den festen Träger (3) bezüglich des Eckelements (4) anlenkt,
wobei das Eckeelement (4) ein Blech (40) ist, umfassend:
- einen ersten Teil (41) in Kontakt mit dem Rohr (20), befestigt an dem Rohr, an einer ersten Seite (C1) des Rohrs mittels einer ersten Schweißung (S1),
- einen zweiten Teil (42) in Kontakt mit dem Rohr (20) und befestigt an dem Rohr, an einer zweiten Seite (C2) des Rohrs mittels einer zweiten Schweißung (S2),
wobei das Rohr (20) in einem Gehäuse (LG) des Eckelements aufgenommen ist, welches zwischen dem ersten Teil (41) und dem zweiten Teil (42) definiert ist, wobei der erste Teil (41) und der zweite Teil (42) gegeneinander transversal zu dem Rohr einer Abmessung d des Gehäuses folgend versetzt sind,
**dadurch gekennzeichnet, dass** der erste Teil (41) und der zweite Teil (42) gegeneinander der Länge des Rohrs folgend versetzt sind.

2. Anordnung nach Anspruch 1, wobei das Blech (40), welches das Eckelement bildet, ein Blech ist, welches derart durch Stanzen geschnitten und geformt ist, dass der erste Teil (41) und der zweite Teil (42), welche gegeneinander transversal zu dem Rohr versetzt sind, während des Stanzens des Blechs in einem einzigen Stanz-Formungsvorgang erhalten werden.

3. Anordnung nach einem der Ansprüche 1 bis 2, wobei das Rückenlehnen-Gestell (2) einen Rahmen bildet, welcher eine vordere Fläche (FRT) und eine hintere Fläche (DRL) aufweist, und wobei die erste Schweißung (S1) die erste Seite (C1) des Rohrs mit dem ersten Teil (41) des Eckelements (4) an der vorderen Fläche (FRT) des Rahmens anbringt und die zweite Schweißung (S2) die zweite Seite (C2) des Rohrs mit dem zweiten Teil (42) des Eckelements (4) an der hinteren Seite (DRL) des Rahmens anbringt oder umgekehrt.

4. Anordnung nach einem der Ansprüche 1 bis 3, wobei das Eckelement auf dem Niveau einer Biegung (Cd) des Rohrs geschweißt ist, welche ein erstes Ende und ein zweites Ende umfasst, sowie einen Mittel-Biegungsabschnitt zwischen dem ersten Ende und dem zweiten Ende,
und wobei der erste Teil (41) umfasst:
- einen ersten Blechabschnitt (410), welcher an das erste Ende der Biegung durch eine erste Schweißlinie (L1S1) der ersten Schweißung (S1) geschweißt ist,
- einen zweiten Blechabschnitt (411), welcher an ein zweites Ende der Biegung durch eine zweite Schweißlinie (L2S1) der ersten Schweißung (S1) geschweißt ist,
wobei die erste Schweißlinie (L1S1) und die zweite Schweißlinie (L2S1) der Länge der Biegung folgend an der ersten Seite (C1) des Rohrs (20) unterbrochen sind, und wobei der zweite Teil (42) einen dritten Blechabschnitt (420) umfasst, welcher an das Rohr durch eine dritte Schweißlinie (L3S1) geschweißt ist, welche den zweiten Teil (42) und den Mittel-Biegungsabschnitt (20) an der zweiten Seite (C2) des Rohrs anbringt,
und wobei der erste Blechabschnitt (401), der dritte Blechabschnitt (420) und der zweite Blechabschnitt (411) sukzessive der eine den anderen folgend entlang der Länge der Biegung (Cd) verteilt sind, abwechselnd zwischen der ersten Seite (C1) und der zweiten Seite (C2).

5. Anordnung nach Anspruch 4, wobei der erste Blechabschnitt (410) und der zweite Blechabschnitt (411) unterbrochen und untereinander koplanar sind, und wobei der zweite Teil (42), welcher den ebenen dritten Blechabschnitt (420) bildet, parallel zu der Ebene des ersten und zweiten Abschnitts (410, 411) ist, wobei der dritte Blechabschnitt bezüglich der Ebene des ersten und zweiten Abschnitts (410, 411) um die Abmessung d einer Richtung senkrecht zu der Ebene folgend versetzt ist.

6. Anordnung nach Anspruch 5, wobei der ebene erste Blechabschnitt (410) und der ebene zweite Blechabschnitt (411) in ebene Anlage an eine erste ebene Fläche (PL1) der Biegung an der ersten Seite (C1) des Rohrs kommen, und der ebene dritte Blechabschnitt welcher den zweiten Teil (42) bildet, in ebene Anlage an eine zweite ebene Fläche (PL2) der Biegung an der zweiten Seite (C2) des Rohrs (20) kommt.

7. Anordnung nach einem der Ansprüche 1 bis 6, wobei das Blech, welches das Eckelement bildet, einen Sitz für die Gelenkachse (5) umfasst, welche eine erste Rippe (N1) und eine zweite Rippe (N2) umfasst, welche parallel zueinander sind, erhalten durch Stanzen des Eckelements (4), wobei die erste Rippe (N1) und die zweite Rippe (N2) in Kontakt mit zwei Erzeugenden eines zylindrischen Abschnitts (5) der Gelenkachse (5) stehen, wobei die Gelenkachse an das Eckeelement durch eine dritte Schweißung (S3) geschweißt ist, welche die erste Rippe (N1) mit dem zylindrischen Abschnitt (50) verbindet, sowie eine vierte Schweißung (S4), welche die zweite Rippe (N1) mit dem zylindrischen Abschnitt (50) verbindet.

8. Anordnung nach einem der Ansprüche 1 bis 7, wobei der erste Teil (41) des Blechs an einem Hauptteil (PP) des Blechs (40) ausgeführt ist, während sich der zweite Teil (42), welcher insbesondere durch eine Zunge gebildet ist, von dem Hauptteil vorstehend erstreckt, wobei der zweite Teil (42) von kleineren Abmessungen bezüglich des Hauptteils (PP) ist.

9. Anordnung nach Anspruch 8, wobei ein Verbindungsabschnitt (44) des Blechs den zweiten Teil (42) mit dem Hauptteil (PP) verbindet, wobei ein Sitz gebildet ist, an welchem der konvexe Abschnitt der Biegung (Cd) in Anlage kommt, wobei der Verbindungsabschnitt vorzugsweise der Bahnkurve der Biegung folgt.

10. Anordnung nach Anspruch 8 oder 9, wobei der Hauptteil einen Verstärkungsrand (43) an einem äußeren Umfang des Hauptteils (PP) umfasst, welcher sich vorstehend von dem Hauptteil des Blechs (40) einem Vorsteh-Sinn (SS1) folgend erstreckt, welcher dem Vorsteh-Sinn des zweiten Teils (42) bezüglich des Hauptteils (PP) des Blechs entgegengesetzt ist.

11. Anordnung nach Anspruch 10, wobei der Umfangsrand (43) eine Öffnung (OV) umfasst, welche von der Gelenkachse (5) durchlaufen wird, welche an den Hauptteil des Blechs geschweißt ist.

12. Anordnung nach einem der Ansprüche 1 bis 11, wobei der wenigstens eine Träger (3) einen ersten Träger (3G) und einen zweiten Träger (3D) umfasst, welche beiderseits des Rückenlehnen-Gestells (3) verteilt sind, und wobei:
- ein erstes Eckelement (4G) eine erste Biegung (CdG) des Gestells mit dem ersten Träger (3G) verbindet, wobei das erste Eckelement an die erste Biegung (CdG) durch eine erste Schweißung (S1) geschweißt ist, welche eine erste Seite (C1) des Rohrs und den ersten Teil (41) des ersten Eckelements (4G) verbindet, sowie durch eine zweite Schweißung (S2), welche eine zweite Seite (C2) des Rohrs und den zweiten Teil (42) des ersten Eckelements verbindet,
- ein zweites Eckelement (4D) eine zweite Biegung (CdD) des Gestells mit dem zweiten Träger (3D) verbindet, wobei das zweite Eckelement an die zweite Biegung (CdD) durch eine erste Schweißung (S1) geschweißt ist, welche eine erste Seite (C1) des Rohrs und den ersten Teil (41) des zweiten Eckelements (4D) verbindet, sowie durch eine zweite Schweißung (S2), welche eine zweite Seite (C2) des Rohrs und den zweiten Teil (42) des zweiten Eckelements (4D) verbindet.

13. Fahrzeugsitz, umfassend eine Rückenlehnen-Anordnung nach einem der Ansprüche 1 bis 12, wobei der wenigstens eine feste Träger (3) an einem Boden des Fahrzeugs sowie einer Sitzfläche angebracht ist, und wobei das Rückenlehnen-Gestell dazu eingerichtet ist, von einer angehobenen Verwendungsposition, welche dazu eingerichtet ist, einen Benutzer aufzunehmen, zu einer eingeklappten Position überzugehen, in welcher das rohrförmige Rückenlehnen-Gestell in Richtung der Seite der Sitzfläche durch Schwenken des Rückenlehnen-Gestells (2) bezüglich dem wenigstens einen festen Träger um die Gelenkachse (5) eingeklappt ist.

14. Verfahren zum Herstellen einer Rückenlehnen-Anordnung (1) für einen Fahrzeugsitz, umfassend:
- /A/ Erhalten eines Eckelements (4) durch Schneiden durch Stanzen und Stanzen eines Blechs (40), welches ein Gehäuse (LG) bildet, welches zwischen einem ersten Teil (41) und einem zweiten Teil (42) definiert ist, wobei der erste Teil (41) und der zweite Teil (42) gegeneinander einer Abmessung d einer Länge des Gehäuses folgend versetzt sind, wobei der erste Teil (41) und der zweite Teil (42) gegeneinander einer Länge des Gehäuses folgend versetzt sind,
- /B/ Montieren eines rohrförmigen Rückenlehnen-Gestells (2), welches ein Rohr (20) umfasst, durch Einsetzen einer Biegung (Cd) des rohrförmigen Gestells in das Gehäuse des Eckelements (4), wobei der erste Teil (41) in Kontakt mit einer ersten Seite (C1) des Rohrs (20) steht und der zweite Teil (42) in Kontakt mit einer zweiten Seite des Rohrs (20) steht, versetzten Positionen folgend, welche der Länge des Rohrs (2) folgen,
- /C/ Schweißen des Eckelements (4) an das Rückenlehnen-Gestell (2) durch eine erste Schweißung (S1) zwischen dem ersten Teil (41) und der ersten Seite (C1) des Rohrs (20) und eine zweite Schweißung (S2) zwischen dem zweiten Teil (42) und der zweiten Seite (C2) des Rohrs (20), wobei die erste Schweißung (S1) und die zweite Schweißung (S2) der Länge des Rohrs (2) folgend versetzt sind.

15. Verfahren nach Anspruch 14, wobei in /A/ das Schneiden und das Formen des Eckelements ausgehend von einem ebenen Blech in einem einzelnen Stanz-Schneidevorgang erhalten wird, welchem ein einzelner Stanz-Formvorgang nachfolgt.

## Claims

1. A backrest assembly (1) for a vehicle seat comprising a tubular backrest framework (2) comprising a tube (20), and at least one fixed support (3), said backrest framework being mounted so as to pivot relative to said at least one fixed support (3) by means of a gusset (4) welded to the tube and a hinge pin (5) articulating said fixed support (3) relative to the gusset (4), the gusset (4) being a sheet metal (40) comprising:
- a first part (41) in contact with the tube (20), fixed to the tube, on a first side (C1) of the tube, by a first weld (S1),
- a second part (42) in contact with the tube (20) and fixed to the tube, on a second side (C2) of the tube, by a second weld (S2),
the tube (20) being received in a housing (LG) of the gusset, defined between the first part (41) and the second part (42), the first part (41) and the second part (42) being offset from each other, transversely to the tube, along a dimension d of the housing,
**characterised in that** the first part (41) and the second part (42) are offset from each other along the length of the tube.

2. The assembly according to claim 1 wherein the sheet metal (40) forming the gusset is a sheet metal cut and shaped by stamping so that the first part (41) and the second part (42) offset from each other transversely to the tube, are obtained during the stamping of the sheet metal in a single stamping shaping operation.

3. The assembly according to one of claims 1 to 2 wherein the tubular framework (2) forms a frame having a front face (FRT) and a back face (DRL), and wherein the first weld (S 1) connects the first side (C1) of the tube with the first part (41) of the gusset (4) on the front face (FRT) of the frame and the second weld (S2) connects the second side (C2) of the tube with the second part (42) of the gusset (4) on the back face (DRL) of the frame, or vice versa.

4. The assembly according to one of claims 1 to 3 wherein the gusset is welded at an elbow (Cd) of the tube comprising a first end and a second end, as well as a median portion of the elbow between the first end and the second end, and wherein the first part (41) comprises:
- a first portion of sheet metal (410) welded to the first end of the elbow by a first weld line (L1S1) of the first weld (S1),
- a second portion of sheet metal (411) welded to a second end of the elbow by a second weld line (L2S1) of the first weld (S1),
the first weld line (L1S1) and the second weld line (L2S1) being discontinuous along the length of the elbow on the first side (C1) of the tube (20),
and wherein the second part (42) comprises a third sheet metal portion (420) which is welded to the tube by a third weld line (L3S1) connecting the second part (42) and the middle portion of the elbow (20) on the second side (C2) of the tube,
and wherein the first sheet metal portion (401), the third sheet metal portion (420) and the second sheet metal portion (411) are distributed successively one after the other along the length of the elbow (Cd), in alternation between the first side (C1) and the second side (C2).

5. The assembly according to claim 4, wherein the first portion (410) of sheet metal and the second portion (411) of sheet metal are discontinuous and coplanar with each other, and wherein the second part (42) forming the third portion (420) of sheet metal, which is flat, is parallel to the plane of the first and second portions (410, 411), the third portion of sheet metal offset relative to the plane of the first and second portions (410, 411), by the dimension d in a direction perpendicular to said plane.

6. The assembly according to claim 5, wherein the first portion (410) of flat sheet metal and the second portion (411) of flat sheet metal bear flat on a first flat surface (PL1) of the elbow on the first side (C1) of the tube and the third portion of sheet metal, which is flat, forming the second part (42) bears flat on a second flat surface (PL2) of the elbow on the second side (C2) of the tube (20).

7. The assembly according to one of claims 1 to 6, wherein the sheet metal forming a gusset comprises a seat for the hinge pin (5) comprising a first rib (N1) and a second rib (N2) parallel to each other, obtained by stamping the gusset (4), the first rib (N1) and the second rib (N2) in contact with two generatrixes of a cylindrical portion (5) of the hinge pin (5), the hinge pin welded to the gusset by a third weld (S3) joining the first rib (N1) to the cylindrical portion (50) and a fourth weld (S4) joining the second rib (N1) to the cylindrical portion (50).

8. The assembly according to one of claims 1 to 7, wherein the first part (41) of sheet metal is produced on a main part (PP) of the sheet metal (40), while the second part (42) in particular formed by a tab extends in projection from the main part, said second part (42) being of smaller dimensions compared to the main part (PP).

9. The assembly according to claim 8, wherein a connecting portion (44) of the sheet metal connects the second part (42) to the main part (PP), forming a seat on which the convex portion of the elbow (Cd) bears, the connecting portion preferably following the trajectory of the elbow.

10. The assembly according to claim 8 or 9, wherein the main part comprises a reinforcing edge (43), on the outer periphery of the main part (PP), extending in projection from the main part of the sheet metal (40), in a projection direction (SS1) which is opposite to the projection direction of the second part (42) relative to the main part (PP) of the sheet metal.

11. The assembly according to claim 10, wherein the peripheral edge (43) comprises an opening (OV), traversed by the hinge pin (5), welded to the main part of the sheet metal.

12. The assembly according to one of claims 1 to 11, wherein said at least one support (3) comprises a first support (3G) and a second support (3D), distributed on either side of the backrest framework (3), and wherein:
- a first gusset (4G) connects a first elbow (CdG) of the framework to the first support (3G), said first gusset welded to the first elbow (CdG), by a first weld (S1) joining a first side (C1) of the tube and the first part (41) of the first gusset (4G) and by a second weld (S2) joining a second side (C2) of the tube and the second part (42) of the first gusset,
- a second gusset (4D) connects a second elbow (CdD) of the framework to the second support (3D), said second gusset welded to the second elbow (CdD), by a first weld (S1) joining a first side (C1) of the tube and the first part (41) of the second gusset (4D) and by a second weld (S2) joining a second side (C2) of the tube and the second part (42) of the second gusset (4D).

13. A vehicle seat comprising a backrest assembly according to one of claims 1 to 12, of which said at least one fixed support (3) is secured to a floor of the vehicle, as well as to a cushion and wherein the backrest framework is configured to switch from a raised use position, configured to receive a user, to a folded position wherein the tubular backrest framework is folded towards the side of the cushion by pivoting the backrest framework (2) relative to said at least one fixed support, around the hinge axis (5).

14. A method for manufacturing a backrest assembly (1) for a vehicle seat comprising:
- /A/ obtaining a gusset (4) by cutting by stamping and stamping a sheet metal (40), forming a housing (LG) defined between a first part (41) and a second part (42), the first part (41) and the second part (42) offset from each other along a dimension d of width of the housing, the first part (41) and the second part (42) offset from each other along a length of the housing,
- /B/ assembling a tubular backrest framework (2) comprising a tube (20), by inserting an elbow (Cd) of the tubular framework into the housing of the gusset (4), the first part (41) in contact with a first side (C1) of the tube (20), and the second part (42) in contact with a second side of the tube (20) in positions offset along the length of the tube (2),
- /C/ welding the gusset (4) to the backrest framework (2) by a first weld (S1) between the first part (41) and the first side (C1) of the tube (20) and a second weld (S2) between the second part (42) and the second side (C2) of the tube (20), the first weld (S1) and the second weld (S2) offset along the length of the tube (2).

15. The method according to claim 14, wherein in /A/ the cutting and shaping of the gusset is obtained from a flat sheet metal in a single cutting operation by stamping, followed by a single shaping operation by stamping.
